# EUROPÄISCHE PATENTSCHRIFT

(11) **EP 0 524 993 B1**
(45) Veröffentlichungstag und Bekanntmachung des Hinweises auf die Patenterteilung: **17.07.1996**
(21) Anmeldenummer: 91907438.5
(22) Anmeldetag: 10.04.1991
(51) Int. Cl.: H04N 9/83

(54) **VERFAHREN UND VORRICHTUNG ZUR BILDSIGNAL-AUFZEICHNUNG UND/ODER -WIEDERGABE**
PROCESS AND DEVICE FOR IMAGE SIGNAL RECORDING OR REPRODUCTION
PROCEDE ET DISPOSITIF POUR L'ENREGISTREMENT ET/OU LA REPRODUCTION D'UN SIGNAL D'IMAGE

(30) Priorität: 18.04.1990 DE 4012344; 23.11.1990 DE 4037374
(43) Veröffentlichungstag der Anmeldung: 03.02.1993
(73) Patentinhaber: Deutsche Thomson-Brandt GmbH, D-78003 Villingen-Schwenningen (DE)
(72) Erfinder: PLANTHOLT, Martin, W-6277 Bad Camberg 2 (DE); KLUTH, Hans-Jürgen, D-7730 VS-Villingen (DE)
(74) Vertreter: Hartnack, Wolfgang, Dipl.-Ing.
(86) Internationale Anmeldenummer: EP9100676
(87) Internationale Veröffentlichungsnummer: WO9116793

(56) Entgegenhaltungen:
- EP-A- 0 172 991
- EP-A- 0 318 374
- US-A- 4 845 562
- Funkschau, Band 20, 1989, Gerhard Welz: "Aus Deutschen Landen" Zeilen 62-64, 66, 67

## Beschreibung

Die Erfindung betrifft ein Verfahren und eine Vorrichtung zur Bildsignal-Aufzeichnung und/oder -Wiedergabe.

### Stand der Technik

Für die kompatible Einführung eines 16:9-Breitbildformates in bestehende Fernsehstandards (z.B. PAL, SECAM, NTSC) mit dem Format 4:3 wird das sogenannte 'letter box'-Verfahren diskutiert. Bei diesem Verfahren wird auf 4:3-Empfängern die 16:9-Bildinformation mit schwarzen Streifen am oberen und unteren Bildrand dargestellt. Zur Anpassung der Geometrieverhältnisse auf den 4:3-Empfängern bedarf es dazu einer vertikalen Transcodierung des 16:9-Quellsignales, die im sichtbaren Bildfenster auf dem 4:3-Empfänger nur 431 Zeilen darstellt. Die restlichen 144 aktiven Zeilen (575Z - 431Z = 144Z) erscheinen auf dem 4:3-Empfänger als schwarze Streifen zu je 72 Zeilen am oberen und unteren Bildrand. Die Beschreibung eines entsprechenden Verfahrens findet sich in "Verbesserungsmöglichkeiten und Entwicklungstendenzen bei PAL", G. Holoch, Vortrag FKTG, 17.01.1989, Berlin.

Zu einer formatfüllenden Darstellung mit nicht reduzierter Auflösung auf einem 16:9-Empfänger können in den 144 Zeilen, die im 4:3-Empfänger als schwarze Streifen erscheinen, Zusatzinformationen übertragen werden. Diese Zusatzinformationen können nach "Die neuen Wege des alten PAL", A. Ziemer, E. Matzel, Funkschau 18/1989, im sog. Ultraschwarz-Bereich übertragen werden. Es wird dabei der Bereich zwischen Schwarzpegel und z.B. der halben Synchronimpulshöhe ausgenutzt. Damit ist das eingelagerte Zusatzsignal auf dem 4:3-Empfänger nicht sichtbar. In EP-A-0 518 946 ist ein Übertragungsverfahren angegeben, das solche Zusatzinformationen in Form einer Restseitenbandmodulation des Farbträgers überträgt.

Der Oberbegriff des Patentanspruchs 1 basiert auf EP-A-0 172 991.

### Erfindung

Der Erfindung liegt die Aufgabe zugrunde, ein kompatibles Bildsignalaufzeichnungs- und/oder -wiedergabesystem anzugeben, welches die Bildsignale zusammen mit Zusatzinformationen aufzeichnen und/oder wiedergeben kann. Diese Aufgabe wird durch das in Anspruch 1 angegebene erfindungsgemäße Verfahren gelöst.

Im Prinzip besteht das erfindungsgemäße Verfahren darin, daß bei einer Bildsignal-Aufzeichnung und/oder -Wiedergabe von Bildsignalen mit Zusatzinformationen, die gemäß einer Codierungsvorschrift den Bildsignalen zugefügt sind, auf einer Aufzeichnungs- und/oder Wiedergabevorrichtung mit mindestens einem Luminanz- (Y) und mindestens einem Chrominanz-Kanal (C), wobei die Bandbreite der Zusatzinformationen die Bandbreite eines Chrominanz-Kanals überschreitet, für eine Aufzeichnung und/oder Wiedergabe in Abhängigkeit von der Codierungsvorschrift und/oder der zeitlichen Lage der Zusatzinformationen die Zusatzinformationen so verteilt und/oder verarbeitet werden, daß sie unter Verwendung eines Luminanzkanals aufgezeichnet und/oder wiedergegeben werden können.

Vorteilhafte Weiterbildungen des erfindungsgemäßen Verfahrens ergeben sich aus den abhängigen Ansprüchen 2 bis 6.

Der Erfindung liegt die weitere Aufgabe zugrunde, eine Vorrichtung für das erfindungsgemäße Verfahren anzugeben. Diese Aufgabe wird durch die in Anspruch 7 angegebene erfindungsgemäße Vorrichtung gelöst.

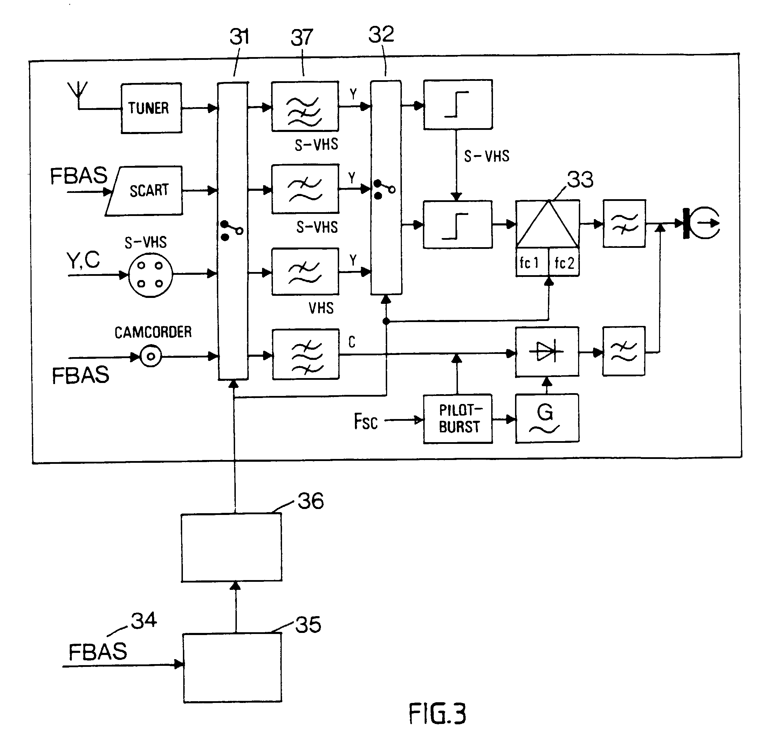

Im Prinzip ist die erfindungsgemäße Vorrichtung versehen mit Mitteln (Fig. 3, S-VHS) zur Aufzeichnung und/oder Wiedergabe von Bildsignalen mit auf den Farbträger aufmodulierten Zusatzinformationen, insbesondere mit einem Videorecorder, mit Umschaltmitteln (31, 32, 49) zur Weiterleitung von demodulierten Zusatzinformationen in periodischen Abständen auf einen Luminanzkanal (Y) bei der Aufzeichnung und/oder zur Weiterleitung von auf einen Luminanzkanal (Y) aufgezeichneten Zusatzinformationen in periodischen Abständen zu Mitteln zur Farbträgermodulation.

Vorteilhafte Weiterbildungen der erfindungsgemäßen Vorrichtung ergeben sich aus den abhängigen Ansprüchen 8 bis 9

Es ist wünschenswert, die obengenannten Zusatzinformationen auch so aufzeichnen zu können (z.B. im VHS- oder S-VHS-Format), daß die Zusatzinformationen bei einer Wiedergabe weiterverarbeitet werden können und nicht durch die Aufzeichnung auf herkömmlichen Videorecordern verlorengehen. Gerade bei der Aufzeichnung von auf den Farbträger aufmodulierten Zusatzinformationen nach EP-A-0 518 946 wäre dies aber der Fall, da Videorecorder nach dem VHS- oder S-VHS-Prinzip mit der sog. Color-Under-Technik arbeiten. Dadurch wird die Bandbreite der Zusatzinformationen derart reduziert, daß sie nicht weiter verwendet werden können.

Im allgemeinen wird für die Übertragung der Zusatzinformationen die volle Kanalbandbreite benötigt (z.B. PAL: 5 MHz). Dies gilt dann ebenso für die Aufzeichnung. Heutige Videorecorder, die mit S-VHS-Technik arbeiten, können prinzipiell eine solche Bandbreite aufzeichnen, erwarten aber dann das breitbandige Luminanzsignal und das Chrominanzsignal auf getrennten Signalleitungen. Im Falle eines nur auf einer Leitung geführten FBAS-Signales wird in den VHS-Mode umgeschaltet, der nur eine geringere Aufzeichnungsbandbreite (ca. 3 MHz) zur Verfügung stellt. In beiden Fällen (S-VHS, VHS) werden jedoch farbträgerfrequente Signale in Color-Under-Technik verarbeitet und weisen nach einer Aufzeichnung nur noch eine Bandbreite von ca. 600 KHz auf. Diese Zusammenhänge sind beispielsweise in dem Artikel "Aus deutschen Landen", Gerhard Welz, Funkschau 20/1989 beschrieben.

Eine breitbandige Aufzeichnung von Zusatzinformationen, insbesondere von farbträgerfrequenten Zusatzinformationen nach EP-A-0 518 946, läßt sich dadurch erreichen, daß abhängig von der fortlaufenden Zeilennummer des aufzuzeichnenden FBAS-Signales zwischen S-VHS- und VHS-Mode umgeschaltet wird. Beispielsweise werden bei 575 aktiven Zeilen eines Vollbil- des jeweils 72 Randzeilen am oberen und unteren Bildrand (insgesamt 2*72 = 144 Zeilen pro Vollbild) als 'letter box'- Zeilen mit Zusatzinformationen übertragen. Der Videorecorder zeichnet dann jeweils die 72 Zeilen am oberen und unteren Bildrand im S-VHS-Mode auf, während die 431 Zeilen des aktiven Bildfensters im VHS-Mode aufgezeichnet werden. Prinzipiell gilt dieses auch für anders gewählte Verhältnisse von Zeilen des aktiven Bildfensters zu 'letter box'-Zeilen. Die Umsteuerung des Aufzeichnungsmodus wird durch eine entsprechende Umschaltung in den Signalwegen erreicht. Das dazu benötigte Steuersignal läßt sich aus den Synchronimpulsen des FBAS-Eingangssignales ableiten. Besonders vorteilhaft ist es, wenn ein auf einem Videorecorder (z.B. S-VHS-Typ) aufzuzeichnendes FBAS-Signal zunächst in Luminanz und Chrominanz separiert wird und die dem Farbträger innerhalb der schwarzen Streifen aufmodulierten Zusatzinformationen entsprechend demoduliert werden, wobei während der Zeilen in den schwarzen Streifen die Zusatzinformationen dem Luminanz-Aufzeichnungskanal zugeführt werden. Dadurch wird ein zweimaliges Umschalten von z.B. Filtern während eines Fernsehbildes mit den daraus resultierenden Einschwingvorgängen vermieden.

### Zeichnungen

Anhand der Zeichnungen werden Ausführungsbeispiele der Erfindung beschrieben. Die Zeichnungen zeigen in:
- Fig. 1: die bekannten Aufzeichnungsbandbreiten von VHS- und S-VHS-Videorecordern;
- Fig. 2: den bekannten Aufnahmekanal eines S-VHS-Videorecorders;
- Fig. 3: den Aufnahmekanal eines S-VHS-Videorecorders und eine erfindungsgemäße Umsteuereinrichtung;
- Fig. 4: einen S-VHS-Videorecorder mit vorgeschaltetem Farbträgerdemodulator und Umschaltern und
- Fig. 5 - 7: ein Ausführungsbeispiel für eine Weiterbildung der Erfindung.

### Ausführungsbeispiele

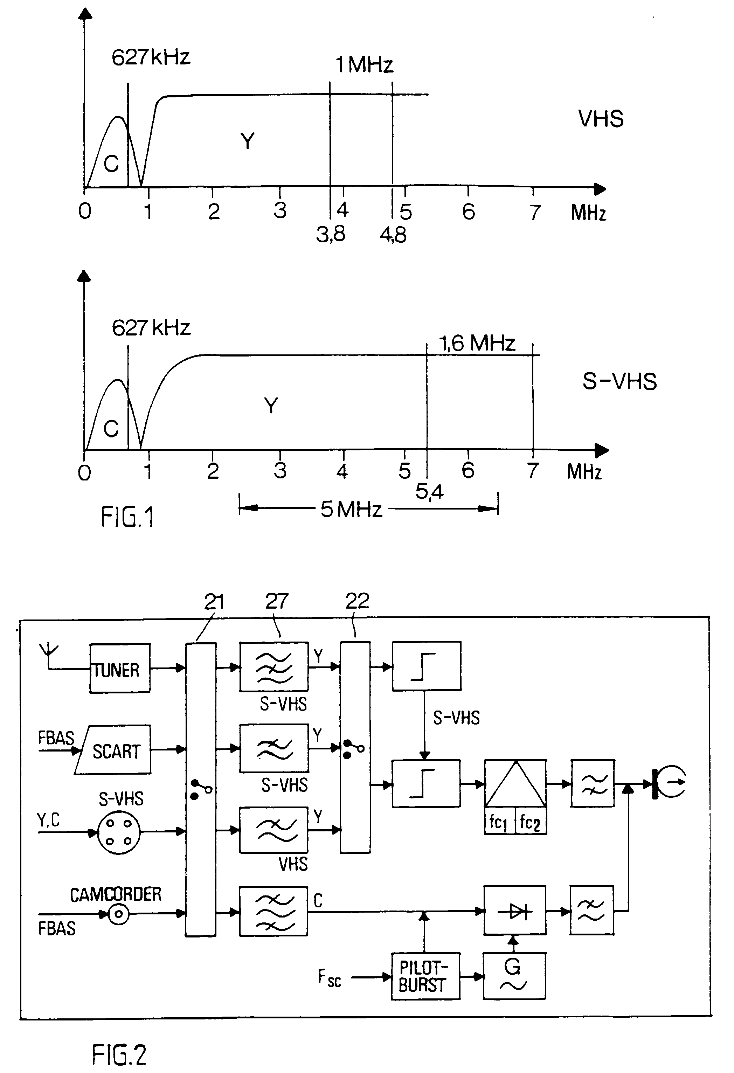

Fig. 1 zeigt die Aufzeichnungsbandbreiten für Luminanz- und Chrominanzsignale eines Videorecorders für den VHS- und S-VHS-Standard, wie sie in dem obengenannten Artikel "Aus deutschen Landen" angegeben sind.

Fig. 2 zeigt den Aufnahmekanal eines S-VHS-Videorecorders (VS 680 VPT von Grundig), wie er in dem Artikel "Aus deutschen Landen" angegeben ist, und eine Filteranordnung zur Aufzeichnung unterschiedlicher Quellsignale. Der Signalquelle entsprechend werden unterschiedliche Filterungen im Signalweg vollzogen und damit die erforderlichen Bandbreiten für VHS- bzw. S-VHS-Aufzeichnung erreicht. Die entsprechende Zuordnung wird durch Schalter 21 bzw. 22 bewirkt.

In den Ansätzen zur Qualitätsverbesserung bestehender Fernsehsysteme (z.B. Einführung des 16:9-Bildseitenverhältnisses) enthalten bei der 'letter box'-Übertragung die schwarzen Streifen am oberen und unteren Bildrand im allgemeinen keine Farbinformationen (z.B. in EP-A-0 518 946 oder EP-A-0 451 205), sodaß für die Aufzeichnung dieser Zusatzinformationen nur ein Luminanzkanal benötigt wird.Bei der Aufzeichnung von Zusatzinformationen, die auf einem Farbträger aufmoduliert sind (wie z.B. in EP-A-0 518 946), würden diese Zusatzinformationen jedoch ohne besondere Maßnahmen im schmalbandigen Chrominanzkanal (Fig. 1) stark bandbegrenzt aufgezeichnet und damit unbrauchbar. Darum ist es vorteilhaft, für die Aufzeichnung dieser Zusatzinformationen den Luminanzkanal zu verwenden.Bei der Aufzeichnung von Zusatzinformationen, die beispielsweise die Differenzen von Zeilen repräsentieren (wie z.B. in EP-A-0 451 205), ist es ebenfalls vorteilhaft, in den Zeilen der 'letter box'-Streifen den Chrominanz-kanal nicht zu nutzen, da sonst Spektralanteile im Farbträgerbereich als Chrominanzsignale behandelt werden bzw. als Luminanzsignale einerNotchfilterung (27, 37) unterzogen werden.

Fig. 3 zeigt den Aufnahmekanal eines S-VHS-Recorders sowie eine Umsteuereinrichtung. Die breitbandige Aufzeichnung von Zusatzinformationen, d.h. S-VHS-Aufzeichnung mit 5 MHz-Tiefpaß im Luminanzkanal und z.B. abgeschaltetem Chrominanzkanal, läßt sich erreichen, wenn die Schalter 31 und 32 und ein umschaltbarer Modulator 33 mittels Auswertung von Synchronimpulsen eines 'letter box'-FBAS-Signales 34 geschaltet werden. Die Schalter 31 und 32 entsprechen dabei den Schaltern 21 und 22 aus Fig. 2.Aus dem FBAS-Signal 34 wird der Zeilensynchronimpuls in der Synchronimpulsabtrennstufe 35 separiert und einem Zeilenzähler mit Umsteuersignal-Impulsformer 36 zugeführt. Dieses Steuersignal betätigt dann die Schalter 31 und 32 und den umschaltbaren Modulator 33 so, daß während bestimmter Zeilen (z.B. in den 2*72 Zeilen am oberen und unteren Bildrand) im S-VHS-Standard aufgezeichnet wird. Der Modulator 33 muß gleichzeitig umgeschaltet werden, da für S-VHS- und VHS-Aufzeichnung unterschiedliche Frequenzlagen des FM-Trägers benutzt werden (Fig. 1).

Eine weitere Möglichkeit besteht darin, 'letter box'-Fernsehsignale grundsätzlich komplett im S-VHS-Mode aufzuzeichnen. Der Modulator 33 und die Filter im Aufnahmekanal (evtl. mit Ausnahme des Notchfilters 27, 37) brauchen dann vorteilhaft nicht zweimal pro Bild umgeschaltet zu werden. Im Fall von farbträger-modulierten Zusatzinformationen müssen lediglich die Zusatzinformationen während der 2 * 72 Zeilen vom Chrominanzeingang zum Luminanzkanal weitergeleitet werden.Falls das 'letter box'-Fernsehsignal nur als FBAS-Signal vorliegt, kann es zunächst in einen Luminanzanteil und in einen Chrominanzanteil aufgespalten werden.

Das Notchfilter 27, 37 wird vorteilhaft während der Aufzeichnung der Zusatzinformationen abgeschaltet.

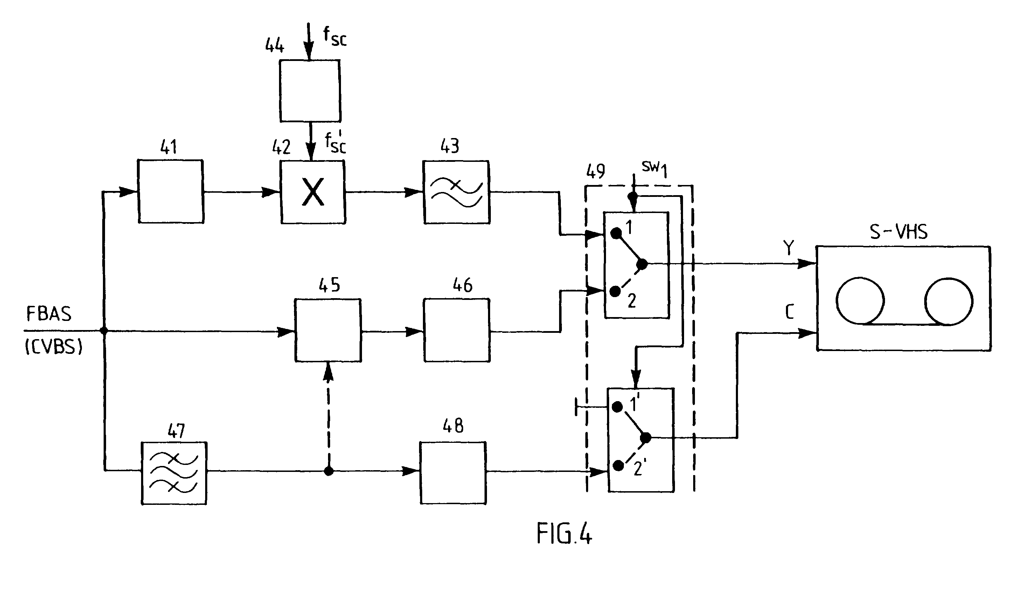

Fig. 4 enthält eine Schaltungsanordnung, mit der aus einem ankommenden FBAS-Signal ein Luminanzsignal Y und ein Chrominanzsignal C gewonnen werden kann. Diese Signale können dann direkt von einem Recorder S-VHS aufgezeichnet werden. Die Schaltungsanordnung enthält auch einen Demodulator 42, mit dem Zusatzinformationen nach EP-A-0 518 946 oder andere Zusatzsignale, die zur Übertragung einem Farbträger aufmoduliert wurden, demoduliert werden können. Die demodulierten Zusatzinformationen liegen dann in Form von Luminanz-Basisbandsignalen Y vor und können dem Y-Eingang des Recorders S-VHS zugeführt werden. Falls keine Trägermodulation von Zusatzsignalen vorliegt, können derartige Signale direkt dem Y-Eingang des Recorders zugeführt werden. Die Aufzeichnung der Signale im Basisband hat gegenüber der Aufzeichnung als farbträgermodulierte Signale den zusätzlichen Vorteil, daß sich durch Gleichlaufschwankungen bedingte Zeitbasisschwankungen nur noch in reduzierter Form auf die Zusatzinformationen auswirken. Aus dem ankommenden FBAS-Signal wird mittels eines Bandpaßfilters 47 der um den Farbträger liegende Frequenzbereich herausgefiltert und somit das Chrominanzsignal C gewonnen. Das Chrominanzsignal wird dann gegebenenfalls einer zweiten Laufzeitschaltung 48 zugeführt, die eine zeitliche Anpassung an die Luminanzsignalverarbeitung bzw. an die Verarbeitungszeit für die Zusatzinformationen vornimmt. Dieses Chrominanzsignal gelangt dann auf einen vierten Eingang 2' einer Videoumschaltvorrichtung 49, die zeilenabhängig eine Schalterstellung ändert kann.Während der Letterbox-Zeilen (Schalterstellung 1 bzw. 1') ist kein einen Chrominanz-Bildinhalt repräsentierendes Chrominanzsignal vorhanden. In diesem Fall kann der dritte Eingang 1' der Videoumschaltvorrichtung 49 vorteilhaft auf einen konstanten Wert, z.B. Masse oder mittleres grau (unbunt), gelegt werden.Das Luminanzsignal Y kann in einer Separierstufe 45 aus dem FBAS-Signal gewonnen werden, indem entweder das Chrominanzsignal C vom ankommenden FBAS-Signal subtrahiert oder daß FBAS-Signal einer Notchfilterung unterzogen wird. Das Luminanzsignal Y und das Chrominanzsignal C können auch durch eine vorzugsweise bewegungsadaptive Kammfilterung aus dem FBAS-Signal gewonnen werden.Das Luminanzsignal wird gegebenenfalls anschließend zeitlich in einer ersten Laufzeitschaltung 46 an die Verarbeitungszeit für die Zusatzinformationen angeglichen und einem zweiten Eingang 2 der Videoumschaltvorrichtung 49 zugeführt.

Die Videoumschaltvorrichtung wird von einem Steuersignal sw₁ gesteuert, das beispielsweise mit Hilfe der Synchronimpulsabtrennstufe 35 und des Umsteuersignal-Impulsformers 36 gewonnen wird. Die beiden Schalter in der Videoumschaltvorrichtung befinden sich in Stellung 2 bzw. 2' während der Zeilen des Hauptsignals. Die farbträgermodulierten Zusatzinformationen aus den Zeilen der Letterbox-Streifen des FBAS-Signals werden zunächst einem Nyquistfilter 41 zugeführt, das gemäß EP-A-0 518 946 einen -6dB -Punkt bei der Farbträgerfrequenz aufweist und für eine korrekte Restseitenbandmodulation bzw. -demodulation erforderlich ist. Dieses Ausgangssignal wird dann in einem Demodulator 42 demoduliert, wobei diesem Demodulator ebenfalls die Farbträgerfrequenz f_{sc}' mit einer bestimmten Phasenlage (z.B. entsprechend EP-A-0 518 946 zugeführt wird. Die Farbträgerfrequenz f sc läßt sich in bekannter Weise aus dem übertragenen Burstsignal gewinnen. Die erforderliche Phasenlage von f_{sc}', die der Modulationsphase der Zusatzinformationen entsprechen muß, wird über einen Phasenschieber 44 herbeigeführt. Die bei der Demodulation entstehenden unerwünschten Modulationsprodukte des oberen Seitenbandes werden in einem nachfolgenden Tiefpaßfilter 43 abgetrennt. Diese Tiefpaßfilter sollte das gewonnene Basisband der Zusatzinformationen auf Frequenzen bis zur Farbträgerfrequenz begrenzen. Das Ausgangssignal des Tiefpaßfilters wird einem ersten Eingang 1 der Videoumschaltvorrichtung 49 zugeführt.

Mit der beschriebenen Schaltungsanordnung, die aus einem Letterbox-FBAS-Signal ein separates Luminanzsignal Y und Chrominanzsignal C gewinnt, wird vorteilhaft erreicht, daß innerhalb von Bildern während des Aufzeichnungsvorganges im Recorder S-VHS keine Umschaltvorgänge notwendig werden. Somit werden mögliche Einschwingprobleme von Filtern etc. umgangen.

Wenn ein Standard-FBAS-Signal vorliegt, d.h. kein Letterbox-Signal oder ein Letterbox-Signal ohne Zusatzinformationen, bleiben die beiden Schalter in der Videoumschaltvorrichtung 49 vorteilhaft in Stellung 2 bzw. 2'.

Der Demodulator 42 kann neben der eigentlichen Demodulation vorteilhaft noch eine Verstärkung der Zusatzinformationen durchführen, um die Amplitudenreduktion der Zusatzinformationen durch die Restseitenbandübertragung und die Einlagerung in den Ultra-Schwarz-Bereich EP-A-0 500 579 zu kompensieren. Weiterhin ist eine Anhebung des Gleichspannungspegels (DC-Offset) aus dem Ultra-Schwarz-Bereich heraus, z.B. auf einen mittleren Grau-Pegel, für die Aufzeichnung vorteilhaft, da die Aufzeichnung dann in einem definierten, linearen Aussteuerbereich des Recorders erfolgt und somit Verzerrungen vermieden bzw. reduziert werden. Dieser DC-Offset kann dann gegebenenfalls vor der Einspeisung des aufgezeichneten Signals in eine mit Y/C-Eingängen versehene 16:9-Bildwiedergabevorrichtung wieder rückgängig gemacht werden.

Bei der Wiedergabe durchlaufen die Luminanz- und ChrominanzSignale und Zusatzinformationen eine entsprechende Behandlung.

Durch die Aufzeichnung der Zusatzinformationen im Basisband im Luminanzkanal lassen sich solche Aufzeichnungen auch problemloser schneiden. Voraussetzung ist allerdings, daß die jeweiligen Zusatzinformationen für ein Bild der Bildsignale auch während dieses Bildes generiert bzw. übertragen wurden.

Das Prinzip der Erfindung ist auch in Hi-8 -Videorecordern oder ähnlichen Videorecordern anwendbar, die Chrominanzsignale mit einer verringerten Bandbreite aufzeichnen.

Die Erkennung eines Letterbox-FBAS-Signales kann durch einen mitübertragenen Identifikationsimpuls (z.B. während der vertikalen Austastlücke) erfolgen. Andererseits läßt sich auch in einem lokalen Signalart-Detektor die Tatsache auswerten, daß die Zusatzinformationen nach EP-A-0 500 579 oder EP-A-0 451 205 im sog. Ultraschwarz-Bereich, d.h. mit Signalanteilen unterhalb des Schwarzpegels, übertragen werden.

Wenn die beschriebene Zusatzinformation, auch Helpersignal genannt, mit der Amplitudenlage im Ultraschwarzgebiet mit einem üblichen Videorecorder aufgezeichnet werden soll, ist die Aufzeichnung dieses Helpersignals nicht ohne weiteres möglich, da übliche Videorecorder Signale im Ultraschwarzgebiet unterdrücken.

Gemäß einer Weiterbildung der Erfindung wird die Aufzeichnung des Helpersignals mit einem üblichen Videorecorder dadurch ermöglicht, daß der Aufnahmeweg des Recorders eine Schaltung enthält, die das Helpersignal in den BA-Amplitudenbereich verschiebt. Der Wiedergabeweg enthält eine Schaltung, die das Helpersignal wieder in den ursprünglichen Amplitudenbereich verschiebt. Diese Weiterbildung beruht auf folgender Überlegung.

Die Amplitudenlage des Helpersignals im Ultraschwarzgebiet ist notwendig, weil sonst durch das Signal innerhalb der schwarzen Balken am oberen und unteren Bildrand sichtbare Störungen auftreten. Bei der Aufzeichnung des Signals ist diese modifizierte Amplitudenlage jedoch nicht notwendig, weil das Signal nicht sichtbar gemacht wird. Deshalb ist es möglich, das Helpersignal für die Aufzeichnung in den AB-Amplitudenbereich zu verschieben, der mit dem Recorder aufgezeichnet werden kann. Ein wesentlicher Vorteil besteht darin, daß die eigentliche Aufzeichnungseinheit nicht geändert werden muß. Diese erhält nach wie vor nur ein Signal, das sie wie ein übliches Fernsehsignal ohne jede Modifikation aufzeichnen kann.

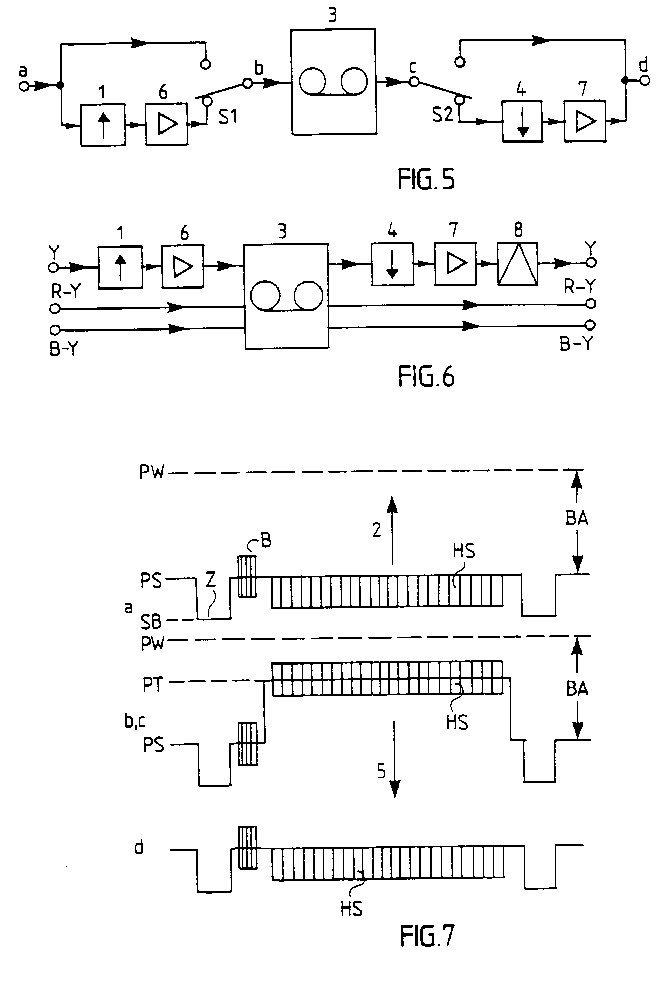

In Fig. 5 steht an der Klemme a ein Signal gemäß Fig. 7a mit dem Zeilensynchronimpuls Z, dem Farbsynchronsignal B und dem Helpersignal HS, das nur während der ersten 72 und der letzten aktiven 72 Zeilen eines Bildes übertragen wird. Der Amplitudenbereich des Helpersignals HS liegt im Ultraschwarzgebiet zwischen dem Schwarzpegel PS und dem Synchronboden SB. Das Signal enthält somit im BA-Bereich zwischen dem Schwarzpegel PS und dem Weißpegel PW keine Signalanteile. Dadurch wird erreicht, daß während der ersten und letzten 72 Zeilen am oberen und unteren Bildrand schwarze Balken ohne sichtbare Störungen geschrieben werden.Das Helpersignal HS hat dabei eine Amplitude von 0,5 V. Die BA-Amplitude beträgt 0,7 V.

Für die Aufzeichnung eines derartigen Signals ist der Schalter S1 in die dargestellte Stellung umgelegt. Das Signal gemäß Fig. 7a gelangt auf die Stufe 1. Die Stufe 1 bewirkt eine Gleichspannungsverschiebung des Signals HS, wie durch den Pfeil 2 angedeutet. Das Signal HS wird dadurch auf einen Pegel PT innerhalb des BA-Bereiches verschoben, der bei 0,3 V liegt. Bei dem derart modifizierten Signal gemäß Fig. 7b,c liegt somit das Signal HS im BA-Bereich und kann daher mit der Aufzeichnungseinheit 3 wie ein übliches Signal aufgezeichnet werden.

Bei der Wiedergabe gelangt das Signal gemäß Fig. 7b,c von der Klemme c über den Umschalter 2 auf die Stufe 4. Die Stufe 4 verschiebt das Signal gemäß Fig. 7b,c, wie durch den Pfeil 5 angedeutet wieder in die ursprüngliche Amplitudenlage gemäß Fig. 7b, die der Amplitudenlage gemäß Fig. 7a entspricht. An der Klemme d steht somit wieder das der Klemme a zugeführte Signal. Lediglich für die Aufzeichnung mit der Einheit 3 ist das Signal vorübergehend in die Form gemäß Fig. 7b,c umgewandelt.

Das übliche Helpersignal HS nimmt den BA-Amplitudenbereich nicht voll ein. Um den Störabstand zu verbessern, ist es zweckmäßig, zusätzlich zu der Signalverschiebung die Amplitude des Signals HS soweit anzuheben, daß sie etwa den gesamten BA-Bereich einnimmt. Zu diesem Zweck ist in Fig. 5 der Verstärker 6 vorgesehen. Bei der Wiedergabe wird diese Amplitudenerhöhung durch den Verstärker 7 wieder rückgängig gemacht, damit das Signal an der Klemme d wieder die ursprüngliche Amplitude hat.

Vorzugsweise ist eine Schaltung vorgesehen, die feststellt, ob die ersten oder letzten 72 Zeilen kein Signal im BA-Bereich enthalten. Wenn eine derartige Schaltung mit Amplitudendedektoren und Zählern das Fehlen von Signalanteilen im BA-Bereich über diesen Zeitraum feststellt, wird eine Schaltspannung erzeugt. Diese Schaltspannung schaltet die Schalter S1, S2 in Fig. 5 in die dargestellte Lage. Für ein Signal ohne das beschriebene Helpersignal befinden sich die Schalter S1, S2 in der oberen Stellung, da dann die Modifikation gemäß Fig. 7 nicht notwendig ist. Das Signal HS ist z.B. einem PAL-Farbträger in Amplitudenmodulation aufmoduliert, der die konstante Phase der Modulationsachse +V, also ohne PAL-Umschaltung hat. Diese Modulationsachse V entspricht bei PAL dem Farbdifferenzsignal R-Y.

Fig. 6 zeigt eine Variante für einen sogenannten Komponenten-recorder, der die Signale Y, R-Y, B-Y getrennt aufzeichnet. In diesem Fall ist die Umwandlung mit der Stufe 1 und dem Verstärker 6 sowie die Rückumwandlung mit der Stufe 4 und dem Verstärker 7 nur für das Y-Signal wirksam, da die Farbdifferenzsignale das Helpersignai nicht enthalten. Da Y als Basisbandsignal aufgezeichnet ist, hat das Helpersignal nicht die Form eines modulierten Trägers. Deshalb ist zusätzlich der Modulator 8 vorgesehen, der das Helpersignal als Y-Anteil im Basisband wieder in ein Trägersignal gemäß Fig. 7 umwandelt.

Der Recorder gemäß Fig. 5 ist z.B. ein 1-Zoll B- oder C-Recorder. Der Recorder 3 gemäß Fig. 6 ist z.B. ein Broadcast Component Recorder vom Typ Betacam oder M2. Die beschriebene Verschiebung des Signals HS bei der Aufnahme und bei der Wiedergabe beginnt vorzugsweise kurz nach dem Ende des Farbsynchronsignals B und endet kurz vor Beginn des nächsten Zeilensynchronimpulses Z. Das ist notwendig, da die Synchronsignale einschließlich des Farbsynchronsignals nicht in der beschriebenen Weise in der Amplitude vorschoben werden dürfen.

## Patentansprüche

1. Verfahren zur Bildsignal-Aufzeichnung und zur entsprechenden -Wiedergabe mit einer Aufzeichnungs- und entsprechenden Wiedergabevorrichtung, die mindestens einen Luini,nanzkanal (Y) für die Aufzeichnung des Luminanzanteils der Bildsignale und mindestens einem Chrominanzkanal (C) für die Aufzeichnung des Chrominanzanteils der Bildsignale enthält, wobei die Bandbreite des Luminanzkanals größer ist als die des Chrominanzkanals und wobei mit den Bildsignalen kombinierte Zusatzinformationen (HS), die periodisch zu solchen Zeitpunkten auftreten, wo kein Chrominanzanteil des Bildsignals vorhanden ist und deren Bandbreite die Bandbreite des entsprechenden Chrominanzkanals übersteigt, auf dem entsprechenden Luminanzkanal aufgezeichnet werden/sind, **dadurch gekennzeichnet,** daß die Bildsignale Letterbox-Bildsignale sind und daß die Zusatzinformationen (HS) auf einen Farbträger (f_{sc}) aufmodulierte Luminanzanteile der Letterbox-Eildsignale sind, die zeitlich in den Zeilen der Letterboxstreifen angeordnet sind und die bei einer Aufzeichnung als Chrominanzanteil demoduliert werden und mit Umschaltmitteln (31, 32; 49) während der Letterbox-Streifen dem Luminanzkanal zugeführt werden, wobei während der Zeilen der Letterbox-Streifen für die Zusatzinformationen Keine Notchfilterung (37,45) im Luminenzkanal durchgeführt wird.

2. Verfahren nach Anspruch 1, **daduch gekennzeichnet**, daß der BA-Amplitudenbereich der Zusatzinformation (HS) bei der Aufzeichnung in Richtung Weißpegel verschoben wird und bei der Wiedergabe wieder in den ursprünglichen Amplitudenbereich verschoben wird.

3. Verfahren nach Anspruch 2, **dadurch gekennzeichnet**, daß der BA-Amplitudenbereich der Zusatzinformation (HS) bei der Aufzeichnung vergrößert und bei der Wiedergabe wieder entsprechend abgesenkt wird.

4. Verfahren nach einem oder mehreren der Ansprüche 1 bis 3, **dadurch gekennzeichnet**, daß bei einer Wiedergabe die Luminanz- und Chrominanzanteile der Bildsignale kombiniert und die Zusatzinformationen auf den Farbträger (f_{sc}) aufmoduliert werden.

5. Verfahren nach einem oder mehreren der Ansprüche 1 bis 4, **dadurch gekennzeichnet**, daß die Zeitpunkte für die Umschaltung aus Synchronimpulsen der Bildsignale (FBAS) und/oder aus einer in den Bildsignalen (FBAS) enthaltenen Kennung abgeleitet (35) werden.

6. Verfahren nach einem oder mehreren der Ansprüche 1 bis 6, **dadurch gekennzeichnet**, daß die Zeitpunkte für die Umschaltung aus der Lage von Zeilen der Bildsignale, in denen die Zusatzinformationen einen Ultraschwarzbereich belegen, abgeleitet werden.

7. Vorrichtung für ein Verfahren nach einem oder mehreren der Ansprüche 1 bis 6, versehen mit Recordermitteln (S-VHS), insbesondere einem videorecorder, zur Aufzeichnung und zur entsprechenden Wiedergabe von Letterbox-Bildsignalen mit auf den Farbträger (f_{sc}) aufmodulierten Luminanz-Zusatzinformationen, die zeitlich in den Zeilen der Letterbox-streifen angeordnet sind, mit einem Farbträgerdemodulator (42) zur Gewinnung dieser Zusatzinformationen für die Aufzeichnung und mit Umschaltmitteln (31, 32, 49) zur Weiterleitung der demodulierten Zusatzinformationen während der Letterbox-Streifen auf den Luminanzkanal (Y) der Recordermittel und zur entsprechenden Weiterleitung der auf dem Luminanzkanal aufgezeichneten Zusatzinformationen während der Letterbox-Streifen zu Mitteln zur Farbträgermodulation (33), wobei während der Zeilen der Letterboxstreifen für die Zusatzinformationen Keine Notchfilterung (37,45) im Luminanzkanal durchgeführt wird.

8. Vorrichtung für ein Verfahren nach Anspruch 7, **dadurch gekennzeichnet**, daß der Aufnahmeweg eine Schaltung (1) enthält, die die Zusatzinformation (HS) in den BA-Ainplitudenbereich verschiebt, und der Wiedergabeweg eine Schaltung (4) enthält, die die Zusatzinformation (HS) wieder in den ursprünglichen Amplitudenbereich verschiebt.

9. Vorrichtung nach Anspruch 8, **dadurch gekennzeichnet,** daß der Aufnahmeweg einen Verstärker (6) enthält, der den Amplitudenbereich der Zusatzinformation (HS) etwa auf den gesamten BA-Bereich anhebt.

## Claims

1. Method for the recording and for the corresponding reproduction of image signals using a recording and corresponding reproduction device which includes at least one luminance channel (Y) for the recording of the luminance component of the image signal and at least one chrominance channel (C) for the recording of the chrominance component of the image signal, wherein the bandwidth of the luminance channel is greater than that of the chrominance channel and wherein auxiliary items of information (HS), which are combined with the image signals and which periodically appear at those time points at which a chrominance component of the image signal is not present and whose bandwidth exceeds the bandwidth of the corresponding chrominance channel, are being / are recorded in the corresponding luminance channel, characterised in that, the image signals are letter box image signals and that the auxiliary items of information (HS) are luminance components of the letter box signals that are modulated onto a colour sub-carrier (f_{sc}) and are arranged chronologically over the lines of the letter box bands and which are demodulated as a chrominance component during a recording and are supplied to the luminance channel during the letter box bands by means of switching means (31, 32; 49), wherein a notch filtering process (37, 45) for the auxiliary items of information is not carried out in the luminance channel during the lines of the letter box bands.

2. Method in accordance with Claim 1, characterised in that, the BA amplitude region of the auxiliary item of information (HS) is displaced towards the white level during the recording process and is displaced back into the original amplitude region during the reproduction process.

3. Method in accordance with Claim 2, characterised in that, the BA amplitude region of the auxiliary item of information (HS) is enlarged during the recording process and correspondingly reduced again during the reproduction process.

4. Method in accordance with any one or more of the Claims 1 to 3, characterised in that, the luminance and chrominance components of the image signal are combined and the auxiliary items of information are modulated onto the colour sub-carrier (f_{sc}) during a reproduction process.

5. Method in accordance with any one or more of the Claims 1 to 4, characterised in that, the time points for the switching process are derived from the synchronising pulses of the image signals (FBAS) and/or from an identifier contained in the image signals (FBAS).

6. Method in accordance with any one or more of the Claims 1 to 6, characterised in that, the time points for the switching process are derived from the position of the lines of the image signals in which the auxiliary items of information occupy an ultra black region.

7. Device for a method in accordance with any one or more of the Claims 1 to 6, provided with recorder means (S-VHS), in particular a video recorder, for the recording and for the corresponding reproduction of letter box image signals having auxiliary items of luminance information (HS) that are modulated onto the colour sub-carrier (f_{sc}) and arranged chronologically over the lines of the letter box bands, including a colour sub-carrier demodulator (42) for extracting these auxiliary items of information for the recording process and including switching means (31, 32; 49) for passing on the demodulated auxiliary items of information to the luminance channel (Y) of the recorder means during the letter box bands and for correspondingly passing on the auxiliary items of information that have been recorded in the luminance channel during the letter box bands to means (33) for modulating the colour sub-carrier, wherein a notch filtering process (37, 45) for the auxiliary items of information is not carried out in the luminance channel during the lines of the letter box bands.

8. Device for a method in accordance with Claim 7, characterised in that, the recording path includes a circuit (1) which displaces the auxiliary item of information (HS) into the BA amplitude region and the reproduction path includes a circuit (4) which displaces the auxiliary item of information (HS) back into the original amplitude region.

9. Device in accordance with Claim 8, characterised in that, the recording path includes an amplifier (6) which boosts the amplitude region of the auxiliary item of information (HS) to cover approximately the whole of the BA region.

## Revendications

1. Procédé pour l'enregistrement et la reproduction adéquate de signaux vidéo à l'aide d'un dispositif d'enregistrement et de reproduction adéquate comportant au moins un canal de luminance (Y) pour enregistrer la composante de luminance des signaux vidéo et au moins un canal de chrominance (C) pour enregistrer la composante de chrominance des signaux vidéo, sachant que la largeur de bande du canal de luminance est supérieure à celle du canal de chrominance et sachant en outre que des informations additionnelles (HS) associées aux signaux vidéo, qui apparaissent périodiquement au moment où le signal vidéo ne comprend aucune composante de chrominance et dont la largeur de bande dépasse la largeur de bande du canal de chrominance respectif, sont enregistrées sur le canal de luminance correspondant, procédé **caractérisé en ce** que lesdits signaux vidéo sont des signaux vidéo letterbox et que lesdites informations additionnelles (HS) représentent des composantes de luminance des signaux vidéo letterbox modulées sur une sous-porteuse de chrominance (f_{sc}), qui sont placées en durée dans les lignes des bandes letterbox et démodulées, lors d'un enregistrement, sous forme de composante de chrominance, puis amenées, au moyen de dispositifs de commutation (31, 32 ; 49), au canal de luminance durant les bandes letterbox, sachant que, pendant la durée des lignes desdites bandes letterbox, aucun filtrage coupe-bande (37, 45) n'est effectué dans le canal de luminance pour lesdites informations additionnelles.

2. Procédé selon la revendication 1 **caractérisé en ce** que la plage d'amplitude BA de l'information additionnelle (HS) est déplacée vers le niveau du blanc lors de l'enregistrement, puis ramenée au niveau initial lors de la reproduction.

3. Procédé selon la revendication 2 **caractérisé en ce** que la plage d'amplitudes BA de ladite information additionnelle (HS) est élargie lors de l'enregistrement et réduite en conséquence lors de la reproduction.

4. Procédé selon l'une quelconque ou plusieurs des revendications 1 à 3 **caractérisé en ce** que, lors d'une reproduction, les composantes de luminance et de chrominance des signaux vidéo sont combinées et que les informations additionnelles sont modulées sur la sous-porteuse de chrominance (f_{sc}).

5. Procédé selon l'une quelconque ou plusieurs des revendications 1 à 4 **caractérisé en ce** que les moments pour la commutation sont définis (35) à partir des impulsions de synchronisation des signaux vidéo (FBAS) et/ou à partir d'une identification contenue dans les signaux vidéo (FBAS).

6. Procédé selon l'une quelconque ou plusieurs des revendications 1 à 6 **caractérisé en ce** que les moments pour la commutation sont définis à partir de la position des lignes des signaux vidéo où les informations additionnelles occupent une plage ultra-noire.

7. Dispositif pour réaliser un procédé selon l'une quelconque ou plusieurs des revendications 1 à 6 comportant des moyens d'enregistrement (S-VHS), notamment un magnétoscope, pour l'enregistrement et la reproduction adéquate de signaux vidéo letterbox comprenant des informations additionnelles de luminance modulées sur la sous-porteuse de chrominance (f_{sc}) qui sont logées en durée dans les bandes letterbox, dispositif comportant en outre un démodulateur de sous-porteuse de chrominance (42) permettant de *préparer* lesdites informations additionnelles pour l'enregistrement, et des moyens de commutation (31, 32, 49) pour la transmission des informations additionnelles démodulées sur le canal de luminance (Y) durant les bandes letterbox et pour la retransmission adéquate, durant les bandes letterbox, desdites informations additionnelles enregistrées sur le canal de luminance, vers des moyens de modulation de la sous-porteuse (33), sachant que, pendant la durée des lignes des bandes letterbox, aucun filtrage coupe-bande (37, 45) n'est effectué dans le canal de luminance pour lesdites informations additionnelles .

8. Dispositif pour réaliser un procédé selon la revendication 7 **caractérisé en ce** que le circuit d'enregistrement comporte un élément (1) assurant le décalage de l'information additionnelle (HS) vers la plage d'amplitudes BA, tandis que le circuit de reproduction contient un élément (4) permettant de ramener ladite information additionnelle (HS) vers la plage d'amplitudes initiale.

9. Dispositif selon la revendication 8 **caractérisé en ce** que le circuit d'enregistrement comporte un amplificateur (6) qui augmente la plage d'amplitudes de ladite information additionnelle (HS) approximativement au niveau de l'ensemble de la plage BA.
